# EUROPEAN PATENT APPLICATION

(11) **EP 3 220 563 A1**
(43) Date of publication of application: **20.09.2017**
(21) Application number: 15858325.2
(22) Date of filing: 26.06.2015
(51) Int. Cl.: H04J 14/02, H04L 29/06

(54) **METHOD AND APPARATUS FOR SENDING PACKET SERVICE SIGNAL, AND RECEIVING METHOD AND APPARATUS**

(30) Priority: 10.11.2014 CN 201410629631
(71) Applicant: ZTE Corporation, Shenzhen City, Guangdong Province 518057 (CN)
(72) Inventor: YUAN, Yan, Shenzhen Guangdong 518057 (CN); FU, Xihua, Shenzhen Guangdong 518057 (CN)
(74) Representative: Potter Clarkson LLP
(86) International application number: PCT/CN2015/082564
(87) International publication number: WO 2016/074484

(57) **Abstract**

Disclosed are a sending method and apparatus for a packet service signal, and a receiving method and apparatus therefor, wherein the sending method comprises: loading a packet service signal into an optical channel data unit (ODU) packet with variable rate corresponding to a packet service signal rate; loading the ODU packet with variable rate into an optical channel payload unit (OPUk); encapsulating the OPUk into an optical channel transmission unit (OTUk) frame; and sending an OTUk signal composed of the OTUk frame. By means of the present invention, the problem in the prior art that since the rate of an ODU signal for loading the packet service signal is fixed, there is a waste of bandwidths when the packet service signal is loaded into the ODU signal with a fixed rate is solved, thereby realizing that the rate of the ODU signal is variable, and saving bandwidths.

## Description

### TECHNICAL FIELD

The present disclosure relates to the communication field, and more particularly, to a method and an apparatus for transmitting packet service signal, as well as a method and an apparatus for receiving the same.

### BACKGROUND

The Optical Transport Network (OTN) standard, which was developed by the International Telecommunication Union (ITU-T), is an important criterion for optical transmission equipment. Now almost all long-distance transmission networks are composed of equipment based on the optical transport network standard.

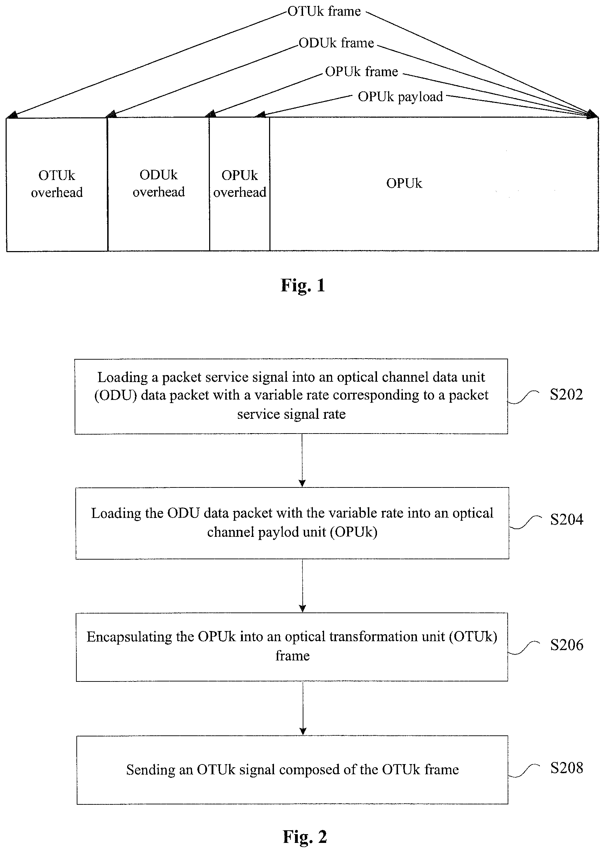

Optical transport network has its standard signal format, optical channel transmission unit OTUk (k = 1, 2, 3, 4). OTUK are used to carry a variety of non-OTN signal or multiple low-rate optical channel data unit ODUi (i = 0, 1, 2, 2, 3, 4, flex) signal, and the ODUi rate is lower than the ODUk rate. Hereinafter, a low-rate ODUi (i <k) signal refers to an ODUi signal having a lower rate than the ODUk rate. The non-OTN signal refers to various other traffic signals other than the OTUk signal, the ODUk signal, and the ODUi signal, including such as synchronous digital hierarchy (referred to as SDH) service signal, ethernet traffic signal, fiber channel service signal, packet traffic signal, and the like. OTUk signal consists of OTUk frames, a remaining part of an OTUk frame with OTUk overhead removed is referred to as the optical channel data unit ODUK frame, a remaining part of the ODUk frame with ODUk overhead removed is referred to as the optical channel payload unit OPUk frame, and a remaining part of the OPUk frame with OPUk overhead removed is referred to as the OPUk payload. The OPUk payload can be used to carry the non-OTN signal or multiple low-rate ODUi (i <k) signal, a signal composed of the ODUk frames may be referred to as the ODUk signal. Fig. 1 illustrates the relation among the OTUk frame and the ODUk frame, as well as the OPUk frame and the OPUk payload in related art.

In the definition of existing optical transport network signal, various services including packet service signal can be transmitted through the optical transport network. The packet service signal is also called data packet service signal, referring to various data packets generated by layer 2 or layer 3 devices. The packet service signal is characterized by unfixed rates, but the physical layer channel used to transmit the packet service signal will be limited on the maximum bandwidth of the packet service signal. The optical transport network serves as the physical layer channel of the packet service signal. The packet service signal generally needs to be mapped and carried in various ODU signals through a generic framing procedure (GFP) -F before being transmitted. The GFP-F signal generated by GPF-F mapping on the packet service signal is provided in the OPU payload of the ODU signal, while all the space of the OPU payload is used to carry the GFP-F signal. The space in the ODU used to carry the packet service signal is the OPU payload. Since the rate of the ODU signal is fixed and the rate of the OPU payload is in a fixed proportional relation with the ODU rate, the rate of the OPU payload is also a fixed rate. The packet rate is variable, however, a conversion from variable rate to a fixed rate is thus required and achieved by the GFP-F mapping. The packet service signal is in the form of packets and composed of a plurality of packets. Each packet is composed of a certain number of bytes, which generally varies between 64 bytes and 10000 bytes. As the GFP-F mapping is performed on the packet service signal, a GFP-F data frame is generated by each packet, which is composed of GFP-F header and payload. The GFP-F header contains information for identifying the GFP-F frame and a payload length which is equal to a length of the packet. The GFP-F payload is used to carry the packet. Due to presence of the GFP-F header, the rate may be increased slightly when the packet is converted to the GFP-F data frame. The rate of the GFP-F data frame, however, is still lower than that of the OPU payload in the ODU. At this time, GFP-IDLE frames need to be introduced therein such that a rate of the GFP-F data frame in combination with the GFP-IDLE frame is equal to that of the OPU payload in the ODU. In this way, the GFP-F data frame and the GFP-IDLE can be provided in the OPU payload of the ODU. The GFP-IDLE frame is fixed as 4 bytes and, thus, can be easily identified.

The method for transmitting packet service signal in the definition of existing optical transport network is implemented as follows. Firstly, an ODU signal with suitable rate (i.e., the ODU directly loading the packet service signal) is selected, according to transmission bandwidth requirement of the packet service signal, as a transmission carrier of the packet service signal. The packet service signal is then loaded into the ODU by means of the GFP-F mapping. The ODU (e.g., selected ODUs include ODUk, k = 1, 2, 3, 4) is subsequently loaded into an OTU at the same order or an ODU with higher rate (e.g., selected ODUs include ODUflex (GFP) -n, n = 1-80 or ODUi, i = 0,1,2,3). Herein, the ODU signal in which the packet service signal is directly loaded is generally in a format of ODUflex (GFP) -n (n = 1-80) with variable rate, and the corresponding bandwidth is about n*1.25G (n = 1-80). Moreover, ODU0 1, 2, 3, 4 may be also selected. The above method is partly featured in that the rate of the ODU for directly loading the packet service signal is fixed. In other words, a bandwidth of the ODU signal for directly loading the packet service signal is fixed. Accordingly, there is waste of bandwidth when providing the packet service signal in the ODU signal with the fixed rate. For example, when a current bandwidth of the packet service signal is 1.26Gbps, the most suitable ODU signal to be selected is in the format of ODUflex(GFP)-2. Since a bandwidth of ODUflex(GFP)-2 is about 2.5G, there may be nearly 1.24G of wasted bandwidth.

No effective solution has been proposed with respect to the problem of bandwidth waste in related art, where a rate of ODU for carrying the packet service is fixed, caused by loading the packet service signal into the ODU signal with the fixed rate.

### SUMMARY

There are provided a method and an apparatus for transmitting packet service signal as well as a method and an apparatus for receiving packet service signal by embodiments of the disclosure, so as to solve at least the problem of wasted bandwidth in related art, which is caused by loading the packet service signal into the ODU signal with fixed rate as the bandwidth for carrying the packet service signal is thus fixed.

According to an embodiment of the disclosure, there is provided a method for transmitting packet service signal, including: loading the packet service signal into an optical channel data unit ODU packet with variable rate corresponding to a rate of the packet service signal; loading the ODU packet with variable rate into an optical channel payload unit OPUk; encapsulating the OPUk into an optical channel transmission unit OTUk frame; and transmitting OTUk signal comprising the OTUk frame.

The loading the packet service signal into an ODU packet with variable rate includes: generating a GFP-F data frame by performing a generic framing procedure GFP-F mapping on the packet service signal; loading the GFP-F data frame into an OPU payload of the ODU packet with variable rate when a rate of the GFP-F data frame is greater than or equal to a preset rate; and filling the GFP-F data frame with a GFP-IDLE frame when the rate of the GFP-F data frame is smaller than the preset rate, and loading the GFP-F data frame along with the GFP-IDLE frame into the OPU payload of the ODU packet with variable rate, wherein a rate of the GFP-F data frame filled with the GFP-IDLE frame is equal to a rate of the OPU payload in the ODU packet with variable rate, and the rate of the OPU payload in the ODU packet with variable rate is equal to the preset rate. In an further embodiment, a rate calculated from (the preset rate*239/238) is smaller than or equal to a rate of a timeslot of the OPUk.

The loading the ODU packet with variable rate into an OPUk includes: loading the ODU packet with variable rate into an OPUk payload of the OPUk.

The loading the ODU packet with variable rate into an OPUk payload of the OPUk includes: mapping the ODU packet with variable rate in accordance with a format of ODU frame, with each ODU frame corresponding to one packet, into a GFP-F data frame; and filling the GFP-F data frame with a GFP-IDLE frame such that a rate of the GFP-F data frame filled with the GFP-IDLE frame is equal to a rate of the OPUk payload of the OPUk, and loading the GFP-F data frame along with the GFP-IDLE frame into the OPUk payload of the OPUk.

The loading the ODU packet with variable rate into an OPUk includes: loading the ODU packet with variable rate into one or more timeslots in an OPUk payload of the OPUk.

The loading the ODU packet with variable rate into one or more timeslots in an OPUk payload of the OPUk includes: mapping the ODU packet with variable rate in accordance with a format of ODU frame, with each ODU frame corresponding to one packet, into a GFP-F data frame; and filling the GFP-F data frame with a GFP-IDLE frame such that a rate of the GFP-F data frame filled with the GFP-IDLE frame is equal to a rate of the one or more timeslots in the OPUk payload of the OPUk, and loading the GFP-F data frame along with the GFP-IDLE frame into the one or more timeslots in the OPUk payload of the OPUk.

According to another embodiment of the disclosure, there is also provided a method for receiving packet service signal, including: receiving optical channel transport unit OTUk signal to acquire an OTUk frame; acquiring an optical channel data unit ODU packet with variable rate from an optical channel payload unit OPUk payload of the OTUk frame; and restoring the packet service signal from the ODU packet with variable rate, wherein the ODU packet with variable rate is generated by loading the packet service signal into the ODU packet with variable rate corresponding to a rate of the packet service signal.

The acquiring an ODU packet with variable rate from an OPUk payload of the OTUk frame includes: restoring the ODU packet with variable rate by performing an anti-generic framing procedure GFP-F mapping on the OPUk payload of the OTUk frame.

The acquiring an ODU packet with variable rate from an OPUk payload of the OTUk frame includes: restoring the ODU packet with variable rate by performing an anti-GFP-F mapping on one or more timeslots in the OPUk payload of the OTUk frame.

The restoring the packet service signal from the ODU packet with variable rate includes: restoring the packet service signal by performing an anti-GFP-F mapping on the ODU packet with variable rate.

According to an embodiment of the disclosure, there is provided an apparatus for transmitting packet service signal, including: a first loading module configured to load the packet service signal into an optical channel data unit ODU packet with variable rate corresponding to a rate of the packet service signal; a second loading module configured to load the ODU packet with variable rate into an optical channel payload unit OPUk; an encapsulation module configured to encapsulate the OPUk into an optical channel transmission unit OTUk frame; and a transmission module configured to transmit OTUk signal comprising the OTUk frame.

The first loading module includes: a first mapping element configured to generate a GFP-F data frame by performing a generic framing procedure GFP-F mapping on the packet service signal; a first loading element configured to load the GFP-F data frame into an OPU payload of the ODU packet with variable rate when a rate of the GFP-F data frame is greater than or equal to a preset rate; and a second loading element configured to fill the GFP-F data frame with a GFP-IDLE frame when the rate of the GFP-F data frame is smaller than the preset rate, and load the GFP-F data frame along with the GFP-IDLE frame into the OPU payload of the ODU packet with variable rate, wherein a rate of the GFP-F data frame filled with the GFP-IDLE frame is equal to a rate of the OPU payload in the ODU packet with variable rate, and the rate of the OPU payload in the ODU packet with variable rate is equal to the preset rate.

A rate calculated from (the preset rate*239/238) is smaller than or equal to a rate of a timeslot of the OPUk.

The second loading module is further configured to load the ODU packet with variable rate into an OPUk payload of the OPUk.

The second loading module includes: a second mapping element configured to map the ODU packet with variable rate in accordance with a format of ODU frame, with each ODU frame corresponding to one packet, into a GFP-F data frame; and a first filling element configured to fill the GFP-F data frame with a GFP-IDLE frame such that a rate of the GFP-F data frame filled with the GFP-IDLE frame is equal to a rate of the OPUk payload of the OPUk, and load the GFP-F data frame along with the GFP-IDLE frame into the OPUk payload of the OPUk.

The second loading module is further configured to load the ODU packet with variable rate into one or more timeslots in an OPUk payload of the OPUk.

The second loading module includes: a third mapping element configured to map the ODU packet with variable rate in accordance with a format of ODU frame, with each ODU frame corresponding to one packet, into a GFP-F data frame; and a second filling element configured to fill the GFP-F data frame with a GFP-IDLE frame such that a rate of the GFP-F data frame filled with the GFP-IDLE frame is equal to a rate of the one or more timeslots in the OPUk payload of the OPUk, and load the GFP-F data frame along with the GFP-IDLE frame into the one or more timeslots in the OPUk payload of the OPUk.

According to another embodiment of the disclosure, there is also provided an apparatus for receiving packet service signal, including: a receiving module configured to receive optical channel transport unit OTUk signal to acquire an OTUk frame; an acquiring module configured to acquire an optical channel data unit ODU packet with variable rate from an optical channel payload unit OPUk payload of the OTUk frame; and a restoring module configured to restore the packet service signal from the ODU packet with variable rate, wherein the ODU packet with variable rate is generated by loading the packet service signal into the ODU packet with variable rate corresponding to a rate of the packet service signal.

The acquiring module includes: a first anti-mapping element configured to restore the ODU packet with variable rate by performing an anti- generic framing procedure GFP-F mapping on the OPUk payload of the OTUk frame.

The acquiring module further includes: a second anti-mapping element configured to restore the ODU packet with variable rate by performing an anti-GFP-F mapping on one or more timeslots in the OPUk payload of the OTUk frame.

The restoring module is further configured to restore the packet service signal by performing an anti-GFP-F mapping on the ODU packet with variable rate.

According to embodiments of the disclosure, the packet service signal is loaded into the ODU packet with variable rate, the ODU packet with variable rate is then loaded into the optical channel payload unit OPUk and the OPUk is encapsulated into the OTUk frame, such that the OTUk signal consisting of the OTUk frames is transmitted. The problem of wasted bandwidth in related art, which is caused by loading the packet service signal into the ODU signal with fixed rate as the bandwidth for carrying the packet service signal is thus fixed, is solved, variable rate of the ODU signal is achieved and the bandwidth is saved.

### BRIEF DESCRIPTION OF THE DRAWINGS

The drawings are described herein to provide a further understanding of the disclosure, which form a part of this application. The exemplary embodiments of the disclosure and the description thereof are intended to be illustrative of the disclosure and do not constitute an improper limitation of the disclosure. In the drawings:
Fig. 1 illustrates relation among an OTUk frame, an ODUk frame, an OPUk frame and an OPUk payload in related art;
Fig. 2 is a flow chart illustrating a method for transmitting packet service signal according to an embodiment of the disclosure;
Fig. 3 is a block diagram illustrating an apparatus for transmitting packet service signal according to an embodiment of the disclosure;
Fig. 4 is a block diagram I illustrating an apparatus for transmitting packet service signal according to an embodiment of the disclosure;
Fig. 5 is a block diagram II illustrating an apparatus for transmitting packet service signal according to an embodiment of the disclosure;
Fig. 6 is a block diagram III illustrating an apparatus for transmitting packet service signal according to an embodiment of the disclosure;
Fig. 7 is a flow chart illustrating a method for receiving packet service signal according to an embodiment of the disclosure;
Fig. 8 is a block diagram illustrating an apparatus for receiving packet service signal according to an embodiment of the disclosure;
Fig. 9 is a block diagram I illustrating an apparatus for receiving packet service signal according to an embodiment of the disclosure;
Fig. 10 is a schematic diagram illustrating a mapping method according to an embodiment of the disclosure when a rate of the packet service signal is less than that of OPU payload in ODUpacket signal with variable minimum rate value; and
Fig. 11 is a schematic diagram illustrating a mapping method according to an embodiment of the disclosure when a rate of the packet service signal is greater than or equal to that of OPU payload in ODUpacket signal with variable minimum rate value.

### DETAILED DESCRIPTION

The present disclosure will be described in detail hereinafter with reference to the accompanying drawings. It is to be noted that embodiments and features thereof described in the present application may be combined with each other in a non-conflicting situation.

There is provided a method for transmitting packet service signal in the embodiment. Fig. 2 is a flow chart illustrating the method for transmitting packet service signal according to the embodiment of the present disclosure. As shown in Fig. 2, the flow includes following steps.

In step S202, the packet service signal is loaded into an optical channel data unit ODU packet with variable rate corresponding to a rate of the packet service signal;

In step S204, the ODU packet with variable rate is loaded into an optical channel payload unit OPUk;

In step S206, the OPUk is encapsulated into an optical channel transmission unit OTUk frame; and

In step S208, OTUk signal carrying the OTUk frame is transmitted.

By implementing the steps as described above, the packet service signal is loaded into the ODU packet with variable rate, the ODU packet with variable rate is then loaded into the optical channel payload unit OPUk and the OPUk is encapsulated into the OTUk frame, such that transmission of the packet service signal is achieved by sending the OTUk signal. Compared with related art where the packet service signal can only be loaded into ODU with a fixed rate, the problem of wasted bandwidth in related art, which is caused by loading the packet service signal into the ODU signal with fixed rate as the bandwidth for carrying the packet service signal is thus fixed, is solved by the above steps, variable rate of the ODU signal is achieved and the bandwidth is saved.

The above step S202 relates to loading the packet service signal into the ODU packet with variable rate. It should be noted that there may be many ways for loading the packet service signal into the ODU packet with variable rate, which will be exemplarily described as follows. In an optional embodiment, a GFP-F data frame is generated by performing a generic framing procedure GFP-F mapping on the packet service signal, and the GFP-F data frame is loaded into an OPU payload of the ODU packet with variable rate. In another optional embodiment, the GFP-F data frame is loaded into the OPU payload of the ODU packet with variable rate when a rate of the GFP-F data frame is greater than or equal to a preset rate. In yet another optional embodiment, the GFP-F data frame is filled with a GFP-IDLE frame when the rate of the GFP-F data frame is smaller than to the preset rate, and the GFP-F data frame along with the GFP-IDLE frame are loaded into the OPU payload of the ODU packet with variable rate. Herein, a rate of the GFP-F data frame filled with the GFP-IDLE frame is equal to the preset rate. Since the ODU packet carried with the packet service signal is variable in rate, the rate of the ODU packet with variable rate can be adjusted properly according to a size of the packet service signal, and thus a bandwidth of the ODU packet with variable rate can be saved.

The above step S204 relates to loading the ODU packet with variable rate into the OPUk. In an optional embodiment, the ODU packet with variable rate is loaded into an OPUk payload of the OPUk. In another optional embodiment, the ODU packet with variable rate is loaded into one or more timeslots in an OPUk payload of the OPUk. Those two optional embodiments will be described as follows.

### Optional Embodiment I

The ODU packet with variable rate may be loaded into the OPUk payload of the OPUk by mapping the ODU packet with variable rate in accordance with a format of ODU frame, with each ODU frame corresponding to one packet, into a GFP-F data frame; filling the GFP-F data frame with a GFP-IDLE frame such that a rate of the GFP-F data frame filled with the GFP-IDLE frame is equal to a rate of the OPUk payload of the OPUk; loading the GFP-F data frame along with the GFP-IDLE frame into the OPUk payload of the OPUk.

### Optional Embodiment II

The ODU packet with variable rate may be loaded into one or more timeslots in the OPUk payload of the OPUk by mapping the ODU packet with variable rate in accordance with a format of ODU frame, with each ODU frame corresponding to one packet, into a GFP-F data frame; filling the GFP-F data frame with a GFP-IDLE frame such that a rate of the GFP-F data frame filled with the GFP-IDLE frame is equal to a rate of the one or more timeslots in the OPUk payload of the OPUk; and loading the GFP-F data frame along with the GFP-IDLE frame into the one or more timeslots in the OPUk payload of the OPUk.

In an embodiment, a rate calculated from (the preset rate*239/238) is smaller than or equal to a rate of a timeslot of the OPUk.

In the present disclosure, there is also provided an apparatus for transmitting packet service signal which is configured to implement the above-described embodiments and preferred embodiments, for which the description will not be elaborated. As used herein, the term "module" may refer to a combination of software and/or hardware for achieving the preset function. Although the apparatuses described in the following embodiments are preferably implemented in software, the implementation of hardware, or a combination of software and hardware, is also possible and able to be designed.

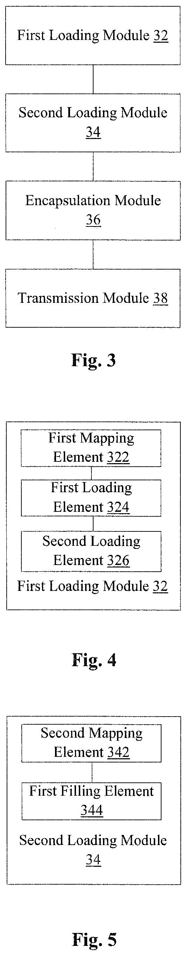

Fig. 3 is a block diagram illustrating an apparatus for transmitting packet service signal according to an embodiment of the disclosure. As shown in Fig. 3, the apparatus includes: a first loading module 32 configured to load the packet service signal into an optical channel data unit ODU packet with variable rate corresponding to a rate of the packet service signal; a second loading module 34 configured to load the ODU packet with variable rate into an optical channel payload unit OPUk; an encapsulation module 36 configured to encapsulate the OPUk into an optical channel transmission unit OTUk frame; and a transmission module 38 configured to transmit OTUk signal comprising the OTUk frame.

Fig. 4 is a block diagram I illustrating an apparatus for transmitting packet service signal according to an embodiment of the disclosure. As shown in Fig. 4, the first loading module includes: a first mapping element 322 configured to generate a GFP-F data frame by performing a generic framing procedure GFP-F mapping on the packet service signal; a first loading element 324 configured to load the GFP-F data frame into an OPU payload of the ODU packet with variable rate when a rate of the GFP-F data frame is greater than or equal to a preset rate; and a second loading element 326 configured to fill the GFP-F data frame with a GFP-IDLE frame when the rate of the GFP-F data frame is smaller than the preset rate, and load the GFP-F data frame along with the GFP-IDLE frame into the OPU payload of the ODU packet with variable rate. Herein, a rate of the GFP-F data frame filled with the GFP-IDLE frame is equal to a rate of the OPU payload in the ODU packet with variable rate, and the rate of the OPU payload in the ODU packet with variable rate is equal to the preset rate.

In an embodiment, a rate calculated from (the preset rate*239/238) is smaller than or equal to a rate of a timeslot of the OPUk.

In an embodiment, the second loading module 34 is further configured to load the ODU packet with variable rate into an OPUk payload of the OPUk.

Fig. 5 is a block diagram II illustrating an apparatus for transmitting packet service signal according to an embodiment of the disclosure. As shown in Fig. 5, the second loading module 34 includes: a second mapping element 342 configured to map the ODU packet with variable rate in accordance with a format of ODU frame, with each ODU frame corresponding to one packet, into a GFP-F data frame; and a first filling element 344 configured to fill the GFP-F data frame with a GFP-IDLE frame such that a rate of the GFP-F data frame filled with the GFP-IDLE frame is equal to a rate of the OPUk payload of the OPUk, and load the GFP-F data frame along with the GFP-IDLE frame into the OPUk payload of the OPUk.

In an embodiment, the second loading module 34 is further configured to load the ODU packet with variable rate into one or more timeslots in an OPUk payload of the OPUk.

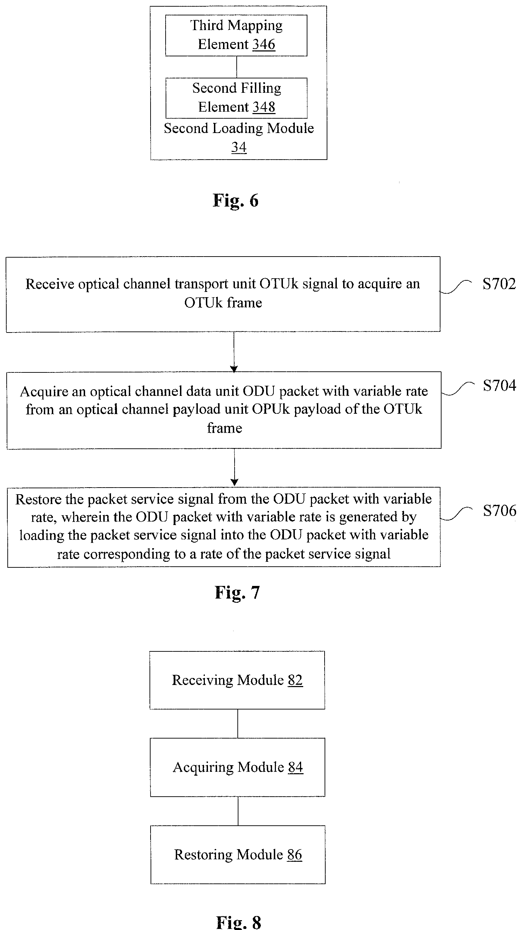

Fig. 6 is a block diagram III illustrating an apparatus for transmitting packet service signal according to an embodiment of the disclosure. As shown in Fig. 6, the second loading module 34 includes: a third mapping element 346 configured to map the ODU packet with variable rate in accordance with a format of ODU frame, with each ODU frame corresponding to one packet, into a GFP-F data frame; and a second filling element 348 configured to fill the GFP-F data frame with a GFP-IDLE frame such that a rate of the GFP-F data frame filled with the GFP-IDLE frame is equal to a rate of the one or more timeslots in the OPUk payload of the OPUk, and load the GFP-F data frame along with the GFP-IDLE frame into the one or more timeslots in the OPUk payload of the OPUk.

There is provided a method for receiving packet service signal in the embodiment. Fig. 7 is a flow chart illustrating the method for receiving packet service signal according to the embodiment of the present disclosure. As shown in Fig. 7, the flow includes following steps.

In step S702, optical channel transport unit OTUk signal is received to acquire an OTUk frame.

In step S704, an optical channel data unit ODU packet with variable rate is acquired from an optical channel payload unit OPUk payload of the OTUk frame.

In step S706, the packet service signal is restored from the ODU packet with variable rate, wherein the ODU packet with variable rate is generated by loading the packet service signal into the ODU packet with variable rate corresponding to a rate of the packet service signal.

By implementing the steps as described above, the optical channel transport unit OTUk signal is received to acquire the OTUk frame, then the ODU packet with variable rate is acquired from an OPUk payload of the OTUk frame, and the packet service signal is thus restored from the ODU packet with variable rate. The problem of wasted bandwidth in related art, which is caused by loading the packet service signal into the ODU signal with fixed rate as the bandwidth for carrying the packet service signal is thus fixed, is solved by the above steps, variable rate of the ODU signal is achieved and the bandwidth is saved.

The above step S704 relates to acquiring the ODU packet with variable rate from the OPUk payload of the OTUk frame. In an optional embodiment, the ODU packet with variable rate is restored by performing an anti- generic framing procedure GFP-F mapping on the OPUk payload of the OTUk frame. In another optional embodiment, the ODU packet with variable rate is restored by performing an anti-GFP-F mapping on one or more timeslots in the OPUk payload of the OTUk frame.

The above step S706 relates to restoring the packet service signal from the ODU packet with variable rate. In an embodiment, the packet service signal is restored by performing an anti-GFP-F mapping on the ODU packet with variable rate.

Fig. 8 is a block diagram illustrating an apparatus for receiving packet service signal according to an embodiment of the disclosure. As shown in Fig. 8, the apparatus includes: a receiving module 82 configured to receive optical channel transport unit OTUk signal to acquire an OTUk frame; an acquiring module 84 configured to acquire an optical channel data unit ODU packet with variable rate from an optical channel payload unit OPUk payload of the OTUk frame; and a restoring module 86 configured to restore the packet service signal from the ODU packet with variable rate, wherein the ODU packet with variable rate is generated by loading the packet service signal into the ODU packet with variable rate corresponding to a rate of the packet service signal.

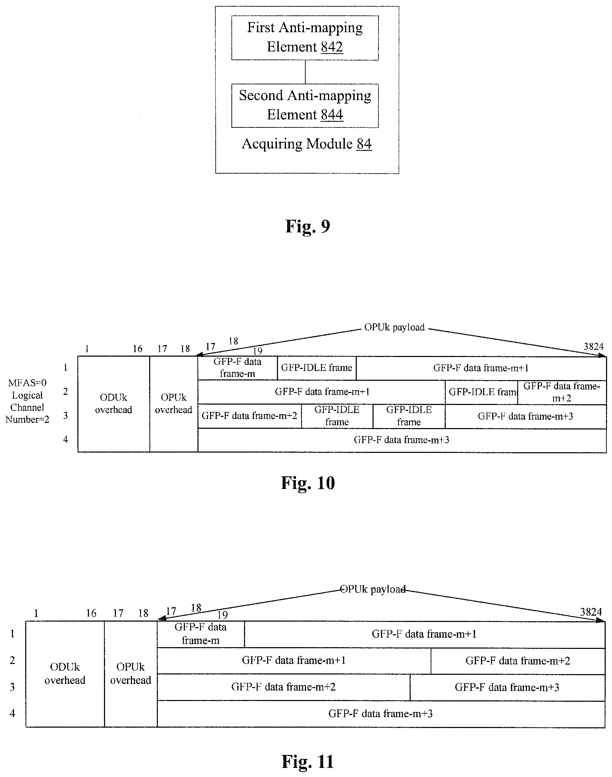

Fig. 9 is a block diagram I illustrating an apparatus for receiving packet service signal according to an embodiment of the disclosure. As shown in Fig. 9, the acquiring module 84 includes: a first anti-mapping element 842 configured to restore the ODU packet with variable rate by performing an anti- generic framing procedure GFP-F mapping on the OPUk payload of the OTUk frame; and a second anti-mapping element 844 configured to restore the ODU packet with variable rate by performing an anti-GFP-F mapping on one or more timeslots in the OPUk payload of the OTUk frame.

In an embodiment, the restoring module 86 is further configured to restore the packet service signal by performing an anti-GFP-F mapping on the ODU packet with variable rate.

It should be noted that each of the above-described modules can be realized by software or hardware. As to the hardware, it may be implemented through following manner, but not limited thereto. The above-described modules may be located in a single processor, or may be located at a first processor, a second processor, a third processor and the like, respectively.

Optional embodiments will be described in further detail below with reference to the accompanying drawings.

The basic concept of the present embodiment lies in providing an ODU signal with variable rate and naming it as an ODU packet. The rate of the ODU packet bandwidth can better accommodate the rate of the packet service signal so that the packet service signal is loaded into the ODU flex (packet) substantially without wasted bandwidth.

Packet service signal is typically loaded in ODU signal with fixed rate such as ODUflex (GFP) -n (n = 1-80), ODUk (k = 0, 1, 2, 3, 4). The present disclosure proposes a new kind of ODU packet signal with variable rate, which remains in the format definition of the existing ODU signal. In other words, the ODU signal consists of the ODU frame illustrated in Fig. 1 including ODU overhead and ODU payload, and the definition as well as the function of the ODU overhead are kept constant, while those of the OPU payload in the ODU frame also remains unchanged, that is, used for carrying the packet service signal subjected to GFP-F mapping. The difference between the ODU packet signal and the existing ODU signal lies in that the ODU packet has a variable rate as well as a minimum rate. The minimum rate is generally chosen to be slightly lower than the rate value of a timeslot in OPUk (k = 1, 2, 3, 4) so that the ODU packet signal can be loaded into a timeslot of the OPUk. For a conventional ODU signal system, one timeslot of the OPUk is substantially equal to 1.25G, and thus the above minimum rate may be set to be about 1.25G. In other words, if the rate of the packet service signal is lower than that of the OPU payload in the ODU packet signal with the lowest rate value, the rate of the ODU packet signal is the fixed minimum rate; if the rate of the packet service signal is higher than or equal to that of the OPU payload in the ODU packet signal with the lowest rate value, the packet service signal is to be loaded into the OPU payload of the ODU packet signal via GFP-F mapping, while the GFP-F mapping is to be performed without inserting any GFP-IDLE Frame. In this way, the rate of the ODU packet signal is variable and a value calculated by its value*238/239 (equal to the rate of its OPU payload) is equal to the rate of the packet service signal subjected to the GFP-F mapping but without inserting the GPF-IDLE frame. Fig. 10 is a schematic diagram illustrating a mapping method according to an embodiment of the disclosure when a rate of the packet service signal is less than that of OPU payload in ODUpacket signal with variable minimum rate value. As shown in Fig. 10, GPF-F data frame-m represents the m-th GFP-F data frame, GPF-F data frame-m+1 represents the (*m*+*1*)-th GFP-F data frame, and so on. Fig. 11 is a schematic diagram illustrating a mapping method according to an embodiment of the disclosure when a rate of the packet service signal is greater than or equal to that of OPU payload in ODU packet signal with variable minimum rate value (in this case, the packet service signal is loaded into the OPU payload without inserting any GFP-IDLE frame).

One reason for setting the minimum rate for the ODU packet signal is to take into account that the ODU packet and packet service signals are in a one-to-one correspondence. The ODU packet is generated regardless of the rate of the packet service signal, because even if the packet service signal is temporarily at a rate of 0, an overhead of the ODU packet signal is still required to implement the maintenance management function of the service signal. Moreover, considering that a bandwidth of at least one timeslot has to be occupied for loading any ODU signal into the OPUk at higher order, a bandwidth of one timeslot is still to be occupied even if the rate of the ODU packet signal is lower than that of one timeslot. Accordingly, the ODU packet signal is set with a minimum rate limit, which is just equal to or slightly less than the rate of one timeslot in the OPUk at higher order.

Some mapping technique must be adopted to load the ODU packet signal with variable rate into the timeslot or the payload of OPUk at high order. In a typical definition of optical transmission signal, however, existing mapping such as AMP, GMP, and BMP are all suitable for signals with fixed rate but cannot be applied to the ODU packet signals with variable rate. The present disclosure proposes to loading the ODU packet signal with variable rate into one or more timeslots of the OPUk at higher order by means of GFP-F mapping. The method is implemented by encapsulating each ODU frame of the ODU packet, as one data packet, into a GFP-F data frame, and filling it with the GFP-IDLE frame to compensate the rate difference so that the rate of the GFP-F data frame filled with the GFP-IDLE frame is equal to the rate of one or more timeslots in the OPUk at higher order.

In summary, the rate of the ODU packet bandwidth of the present embodiment is able to better accommodate the rate of the packet service signal, so that there is substantially no wasted bandwidth when the packet service signal is loaded into the ODU packet. In addition, there is provided a method for loading the ODU packet into the OPUk payload or the timeslot of existing OPUk at higher order, such that the OPUk payload or the timeslot of OPUk at higher order are capable of carrying the ODU signal with variable rate.

In another embodiment, there is also provided a software configured to implement the technical solutions described in the embodiments and preferred embodiments described above.

In yet another embodiment, there is also provided a storage medium in which the above-mentioned software is stored, including but not limited to optical disks, floppy disks, hard disks, rewritable memories, and the like.

It will be apparent to those skilled in the art that the above-described modules or steps of the present disclosure may be implemented by a general purpose computing device which may be located on a single computing device or distributed over a network of multiple computing devices. Optionally, they may be implemented by program code executable by the computing device so that they may be stored in a storage device and executed by the computing device and, in some cases, may be performed in a different order from the steps shown or described above. Also, they may be formed separately into individual integrated circuit modules, or multiple modules or steps therein may be formed into a single integrated circuit module. Thus, the present disclosure is not limited to any particular combination of hardware and software.

The foregoing is merely illustrative of the preferred embodiments of the present disclosure and is not intended to be limiting of the present disclosure. Various changes and modifications may be made by those skilled in the art. Any modifications, equivalent substitutions, improvements, and the like made within the spirit and principles of the invention are intended to be included within the scope of the present disclosure.

### Industrial Applicability

As described above, following advantageous effects can be achieved by the method and apparatus for transmitting packet service signal and that for receiving packet service signal provided by the embodiments of the disclosure. The problem of wasted bandwidth in related art, which is caused by loading the packet service signal into the ODU signal with fixed rate as the bandwidth for carrying the packet service signal is thus fixed, is solved, variable rate of the ODU signal is achieved and the bandwidth is saved.

## Claims

1. A method for transmitting packet service signal, **characterized in** comprising:
loading the packet service signal into an optical channel data unit ODU packet with variable rate corresponding to a rate of the packet service signal;
loading the ODU packet with variable rate into an optical channel payload unit OPUk;
encapsulating the OPUk into an optical channel transmission unit OTUk frame; and
transmitting OTUk signal comprising the OTUk frame.

2. The method according to claim 1, wherein the loading the packet service signal into an ODU packet with variable rate comprises:
generating a GFP-F data frame by performing a generic framing procedure GFP-F mapping on the packet service signal;
loading the GFP-F data frame into an OPU payload of the ODU packet with variable rate when a rate of the GFP-F data frame is greater than or equal to a preset rate; and
filling the GFP-F data frame with a GFP-IDLE frame when the rate of the GFP-F data frame is smaller than the preset rate, and loading the GFP-F data frame along with the GFP-IDLE frame into the OPU payload of the ODU packet with variable rate,
wherein a rate of the GFP-F data frame filled with the GFP-IDLE frame is equal to a rate of the OPU payload in the ODU packet with variable rate, and the rate of the OPU payload in the ODU packet with variable rate is equal to the preset rate.

3. The method according to claim 2, wherein a rate calculated from (the preset rate*239/238) is smaller than or equal to a rate of a timeslot of the OPUk.

4. The method according to claim 1, wherein the loading the ODU packet with variable rate into an OPUk comprises:
loading the ODU packet with variable rate into an OPUk payload of the OPUk.

5. The method according to claim 4, wherein the loading the ODU packet with variable rate into an OPUk payload of the OPUk comprises:
mapping the ODU packet with variable rate in accordance with a format of ODU frame, with each ODU frame corresponding to one packet, into a GFP-F data frame; and
filling the GFP-F data frame with a GFP-IDLE frame such that a rate of the GFP-F data frame filled with the GFP-IDLE frame is equal to a rate of the OPUk payload of the OPUk, and loading the GFP-F data frame along with the GFP-IDLE frame into the OPUk payload of the OPUk.

6. The method according to claim 1, wherein the loading the ODU packet with variable rate into an OPUk comprises:
loading the ODU packet with variable rate into one or more timeslots in an OPUk payload of the OPUk.

7. The method according to claim 6, wherein the loading the ODU packet with variable rate into one or more timeslots in an OPUk payload of the OPUk comprises:
mapping the ODU packet with variable rate in accordance with a format of ODU frame, with each ODU frame corresponding to one packet, into a GFP-F data frame; and
filling the GFP-F data frame with a GFP-IDLE frame such that a rate of the GFP-F data frame filled with the GFP-IDLE frame is equal to a rate of the one or more timeslots in the OPUk payload of the OPUk, and loading the GFP-F data frame along with the GFP-IDLE frame into the one or more timeslots in the OPUk payload of the OPUk.

8. A method for receiving packet service signal, **characterized in** comprising:
receiving optical channel transport unit OTUk signal to acquire an OTUk frame;
acquiring an optical channel data unit ODU packet with variable rate from an optical channel payload unit OPUk payload of the OTUk frame; and
restoring the packet service signal from the ODU packet with variable rate, wherein the ODU packet with variable rate is generated by loading the packet service signal into the ODU packet with variable rate corresponding to a rate of the packet service signal.

9. The method according to claim 8, wherein the acquiring an ODU packet with variable rate from an OPUk payload of the OTUk frame comprises:
restoring the ODU packet with variable rate by performing an anti- generic framing procedure GFP-F mapping on the OPUk payload of the OTUk frame.

10. The method according to claim 8, wherein the acquiring an ODU packet with variable rate from an OPUk payload of the OTUk frame comprises:
restoring the ODU packet with variable rate by performing an anti-GFP-F mapping on one or more timeslots in the OPUk payload of the OTUk frame.

11. The method according to claim 8, wherein the restoring the packet service signal from the ODU packet with variable rate comprises:
restoring the packet service signal by performing an anti-GFP-F mapping on the ODU packet with variable rate.

12. An apparatus for transmitting packet service signal, **characterized in** comprising:
a first loading module configured to load the packet service signal into an optical channel data unit ODU packet with variable rate corresponding to a rate of the packet service signal;
a second loading module configured to load the ODU packet with variable rate into an optical channel payload unit OPUk;
an encapsulation module configured to encapsulate the OPUk into an optical channel transmission unit OTUk frame; and
a transmission module configured to transmit OTUk signal comprising the OTUk frame.

13. The apparatus according to claim 12, wherein the first loading module comprises:
a first mapping element configured to generate a GFP-F data frame by performing a generic framing procedure GFP-F mapping on the packet service signal;
a first loading element configured to load the GFP-F data frame into an OPU payload of the ODU packet with variable rate when a rate of the GFP-F data frame is greater than or equal to a preset rate; and
a second loading element configured to fill the GFP-F data frame with a GFP-IDLE frame when the rate of the GFP-F data frame is smaller than the preset rate, and load the GFP-F data frame along with the GFP-IDLE frame into the OPU payload of the ODU packet with variable rate,
wherein a rate of the GFP-F data frame filled with the GFP-IDLE frame is equal to a rate of the OPU payload in the ODU packet with variable rate, and the rate of the OPU payload in the ODU packet with variable rate is equal to the preset rate.

14. The apparatus according to claim 13, wherein a rate calculated from (the preset rate*239/238) is smaller than or equal to a rate of a timeslot of the OPUk.

15. The apparatus according to claim 12, wherein the second loading module is further configured to load the ODU packet with variable rate into an OPUk payload of the OPUk.

16. The apparatus according to claim 15, wherein the second loading module comprises:
a second mapping element configured to map the ODU packet with variable rate in accordance with a format of ODU frame, with each ODU frame corresponding to one packet, into a GFP-F data frame; and
a first filling element configured to fill the GFP-F data frame with a GFP-IDLE frame such that a rate of the GFP-F data frame filled with the GFP-IDLE frame is equal to a rate of the OPUk payload of the OPUk, and load the GFP-F data frame along with the GFP-IDLE frame into the OPUk payload of the OPUk.

17. The apparatus according to claim 12, wherein the second loading module is further configured to load the ODU packet with variable rate into one or more timeslots in an OPUk payload of the OPUk.

18. The apparatus according to claim 17, wherein the second loading module comprises:
a third mapping element configured to map the ODU packet with variable rate in accordance with a format of ODU frame, with each ODU frame corresponding to one packet, into a GFP-F data frame; and
a second filling element configured to fill the GFP-F data frame with a GFP-IDLE frame such that a rate of the GFP-F data frame filled with the GFP-IDLE frame is equal to a rate of the one or more timeslots in the OPUk payload of the OPUk, and load the GFP-F data frame along with the GFP-IDLE frame into the one or more timeslots in the OPUk payload of the OPUk.

19. An apparatus for receiving packet service signal, **characterized in** comprising:
a receiving module configured to receive optical channel transport unit OTUk signal to acquire an OTUk frame;
an acquiring module configured to acquire an optical channel data unit ODU packet with variable rate from an optical channel payload unit OPUk payload of the OTUk frame; and
a restoring module configured to restore the packet service signal from the ODU packet with variable rate, wherein the ODU packet with variable rate is generated by loading the packet service signal into the ODU packet with variable rate corresponding to a rate of the packet service signal.

20. The apparatus according to claim 19, wherein the acquiring module comprises:
a first anti-mapping element configured to restore the ODU packet with variable rate by performing an anti- generic framing procedure GFP-F mapping on the OPUk payload of the OTUk frame.

21. The apparatus according to claim 19, wherein the acquiring module comprises:
a second anti-mapping element configured to restore the ODU packet with variable rate by performing an anti-GFP-F mapping on one or more timeslots in the OPUk payload of the OTUk frame.

22. The method according to claim 19, wherein the restoring module is further configured to restore the packet service signal by performing an anti-GFP-F mapping on the ODU packet with variable rate.
